# EUROPEAN PATENT SPECIFICATION

(11) **EP 0 395 744 B1**
(45) Date of publication and mention of the grant of the patent: **16.06.1993**
(21) Application number: 89904255.0
(22) Date of filing: 22.03.1989
(51) Int. Cl.: C08G 77/26, C08G 77/382

(54) **IMIDE-CONTAINING POLYSILOXANES AND A PROCESS FOR PREPARING THEM**
IMIDAUFWEISENDE POLYSILOXANE UND VERFAHREN ZUR HERSTELLUNG
POLYSILOXANES CONTENANT UN IMIDE ET PROCEDE DE PREPARATION

(30) Priority: 22.03.1988 KR 30678
(43) Date of publication of application: 07.11.1990
(73) Proprietor: LUCKY, LTD., Seoul 150-010 (KR)
(72) Inventor: PARK, Jung, Ok, Daejeon-si Chungcheongnam-do 301-340 (KR); KIM, Myung, Joong, Dongdaemoon-gu Seoul 130-035 (KR); SONG, Ju, Ok, Daekoo-si 706-031 (KR)
(74) Representative: Bertrand, Didier
(86) International application number: PCT/KR89/00006
(87) International publication number: WO 89/09240

(56) References cited:
- EP-A- 0 284 519
- GB-A- 1 364 166
- GB-A- 2 109 390
- US-A- 4 517 342
- US-A- 4 582 886
- US-A- 4 630 086

## Description

### TECHNICAL FIELD

The present invention relates to a novel polysiloxanes containing imide terminal groups shown by the following formula(I), and to a process for preparing them. Especially, the present invention relates to the polysiloxanes shown by the following formula(I) which can be effectively used as the modifying agent in the field of synthetic resins. 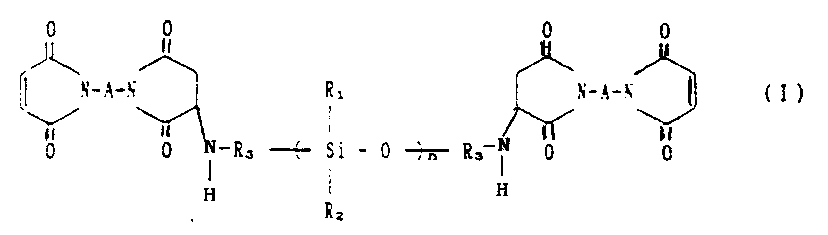
wherein
R₁ and R₂, are each methyl, ethyl, propyl or phenyl ;
R₃ represents an alkylene having 1 to 8 carbon atoms or an alkyl substituted alkylene having 1 to 8 carbon atoms ;
n represents an integer of 30 to 400, which indicates the degree of polymerization of the polysiloxane; and
A represents a divalent group having at least 2, preferably 2 to 20, carbon atoms.

### BACKGROUND ART

Recently, there have been widely known various plastics which have been modified with siloxane compounds.

For the purpose of modifying synthetic resins, polysiloxanes containing hydroxy terminal groups have been already used. In the GB patent No. 880,022, there is disclosed the method that a polyoxyalkylene is reacted with a polysiloxane containing two alkoxy groups at ends to give polyoxyalkylene-polysoloxanediol block copolymers.

Also, a process for preparing new polysiloxanes containing hydroxy terminal groups is proposed in the US patent No. 3,981,898, in which polysiloxanes containing hydroxy terminal groups are prepared by reacting polysiloxanes with polyols and diols.

But, when said polysiloxanes were used as the modifying agents of the thermosetting resins such as unsaturated polyester, epoxy resins and the like, there was disadvantage in that an excess of flash was occurred during the molding process.

On the other hand, in the DE patent No. 1.618.836, there are used trisiloxanols, having hydroxy groups directly bonded to Si atoms, as the plastic modifier. However, such siloxanol compounds have a disadvantage that it is difficult to process them with organic resins and hence they cannot be suitably used as modifying agents for synthetic resins.

GB-A-2 109 390, is considered the nearest state of the art. GB-2 109 390 (hereinafter "the reference") reacts an anhydride with polysiloxane and the end groups do not have a bismaleimide structure. In addition, group A of the formula I in the reference is a -CpH₂p-radical, in which p is 2 to 10, the main chain of which radical may be interrupted by -NII- or -NH-C₁-C₄ alkyl. Therefore, it is clearly not the bismaleimide structure according to the present invention.

The reference has an imide group as recurring structural units while the present invention has the same as a part of the end groups. Also, in case of the reference, the imide group is repeated in main chain in order to cross-link.

Therefore, the present inventors have eargerly studied to overcome the prior disadvantages as described above, and consequently we have developed novel polysiloxanes containing imide terminal groups which are effectively used as a modifying agent for especially thermosetting resins such an insaturated polyester, epoxy resin polyamide.

### SUMMARY OF THE INVENTION

An object of the present invention is to provide new polysiloxanes whose both terminals are substituted by imide groups, which are shown by the formula (I).

Another object of the present invention is to provide a process for preparing the polysiloxanes containing imide terminal groups which are shown by the formula (I).

### DISCLOSURE OF THE INVENTION

The present invention relates to the polysiloxanes containing imide terminal groups shown by the following formula (I), which may be prepared by the Michael addition reaction of a bismaleimide shown by the following formula(II) and a polysiloxane shown by the following formula(III) at a temperature of 110 to 150°C 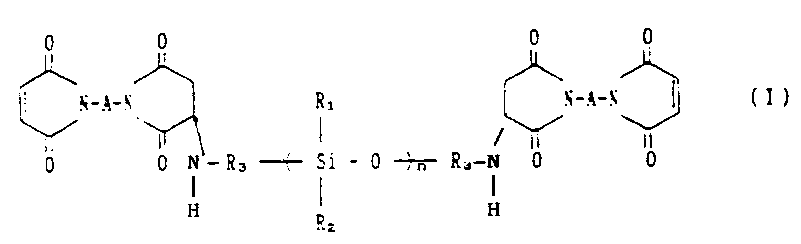 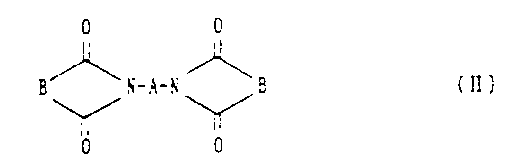 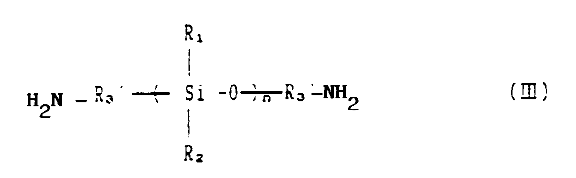
wherein
R₁ and R₂, are each methyl, ethyl, propyl or phenyl ;
R₃ represents an alkylene having 1 to 8 carbon atoms or an alkyl substituted alkylene having 1 to 8 carbon atoms ;
n represents an integer of 30 to 400, which indicates the degree of polymerization of the polysiloxane ;
A represents a divalent group having at least 2, preferably 2 to 20 carbon atoms ; and
B represents a divalent group having at least 2, preferably 2 to 6 carbon atoms, and containing a carbon-carbon double bond.

In the present invention, the bismaleimides of the formula (II) include, for example, N,N'-1,3-phenylene bismaleimide N,N'-4,4'-diphenylmethane bismaleimide, N,N'-4,4'-diphenylether bismaleimide, N,N'-4,4'-diphenylsulfone bismaleimide, N,N'-3,4'-diphenylsulfone bismaleimide, N,N'-4,4'-dimethylcyclohexane bismaleimide, N,N'-4,4'-diphenylcyclohexane bismaleimide, N,N'-1,3-xylilene bismaleimide, 2,4-bismaleimide toluene and 2,6-bismaleimide toluene.

And, the polysiloxanes diamine represented by the formula (III) include, for example, poly(dimethyl siloxane) diamine, poly(methylphenyl siloxane) diamine, poly(epoxy-modified siloxane) diamine, poly(dimethyl siloxane)-co-poly(diphenyl siloxane) diamine, and polysiloxane-polyether diamine copolymer.

According to the present invention, the bismaleimide of the formula(II) is preferably used in an amount of 3 to 10 parts by weight, more preferably 4 to 7 parts by weight, to the polysiloxane of the formula(III) of 30 to 100 parts by weight, more preferably 40 to 60 parts by weight.

The polysiloxanes containing imide terminal groups of the formula(I) which are prepared in accordance with the present invention have some advantages, for example, they have good compatibility with organic resins, and then they can be preferably used as the modifying agents thermosetting resins such as unsaturated polyester, epoxy resins, polyamide, and also thus modified resins show markedly shortened flash lengths when molded.

This invention will be further described in detail with the following examples. It should be noted that the present invention is not limited to these examples.

And, the material properties of the resin compositions which have been prepared by Examples and Comparative examples were evaluated by the method as follows:
Flexural Strength ; ASTM D-790
Flexural Modulus ; ASTM D-790

### Preparation 1

50g of reactive poly(dimethyl siloxane) were put in a 100mℓ three-neck flask equipped with a stirrer and a thermometer, and preheated to 130 °C. After 5g of N,N'-4,4'-diphenylmethane bismaleimide were added therein, the mixture was reacted for 10 minutes at 130 °C with stirring. When the reaction mixture turns into a highly viscous phase, and it was cooled down to room temperature to give the objective polysiloxane.

### Elementary Analysis

N ; 1.8%, C ; 33.2%, H; 8.28%

### IR(cm⁻¹)

-NH₂ ; ν = 3,600 (disappeared in the reaction product)
-NH ; ν = 3,750
-C-N ; ν = 1,350

### Preparation 2

50g of reactive poly(methylphenyl siloxane) and 6.5g of N,N'-diphenylether bismaleimide were put in a 100mℓ three-neck flask equipped with a stirrer and a thermometer. The reaction mixture was heated for 10 minutes at 140 °C with stirring. At the completion of the reaction, the highly viscous reaction mixture was cooled down to room temperature to give the objective polysiloxane.

### Elementary Analysis

N ; 2.1%, C ; 32.5%, H; 7.4%

### IR (cm⁻¹)

-NH₂ ; ν = 3,610 (disappeared in the reaction product)
-NH ; ν = 3,730
-C-N ; ν = 1,320

### NMR(ppm)

-N-H ; δ = 0.6

### Example 1

5g of the polysiloxane obtained by Preparation 1 and 95g of cresol novolak epoxy resin having epoxide equivalent weight of 213 were put in a 300mℓ three-neck flask equipped with a stirrer and a thermometer and intensely stirred for about an hour at 150∼160 °C to obtain a resin mixture. The obtained mixture was designated as Mixture A. After cooling down the mixture to room temperature, 80g of this mixture were mixed in a mechanical mixer with 40g of phenol novolak resin having hydroxy equivalent weight of 306, as curing agent, 1.1g of triphenyl phosphine as curing accelerator, 3g of calcium stearate as releasing agent, and 337g of silica powder.

The obtained composition was melt-mixed using a mixer such as an extruder, a kneader and rolls. After suddenly cooling down the composition in the state B to room temperature and finely pulverizing if, the pulverized composition was put in an aluminum mold preheated to 175 °C, and cured for 3 minutes.

At this moment, the aluminum molds which had gaps of 0.005, 0.01 and 0.02 inch, were used for measuring the length of flash produced during molding process.

Then, the cured compositions was used for measuring the material properties, and the results were shown in Table 1.

### Example 2

5g of the polysiloxane obtained by Preparation 2 and 95g of the resin composition prepared by Example 1 were put in a 300mℓ three-neck flask equipped with a stirrer and a thermometer, and intensely stirred for about an hour at 150∼160°C. Thus obtained mixture was designated as Mixture B. After cooling down the mixture to room temperature, 80g of this mixture were mixed in a mechanical mixer with the same additives as the foregoing Example 1.

Hereinafter the procedure was the same as in Example 1, and then the results were shown in Table 1.

### Comparative example 1

5g of the poly(dimethyl siloxane) used in Preparation 1 and 95g of the epoxy resin used in Example 1 were put in a 300mℓ three-neck flask equipped with a stirrer and a thermometer, and intensely stirred for about an hour at 150∼160°C. The obtained mixture was designated as Mixture C. After cooling down the mixture to room temperature, 80g of this mixture were mixed in a mechanical mixer with the same additives as used in Example 1.

Hereinafter the procedure was the same as in Example 1, and the results were shown in Table 1.

### Comparative example 2

5g of the poly(methylphenyl siloxane) used in Preparation 2 and 95g of the epoxy resin used in the Example 1 were put in a 300mℓ three-neck flask equipped with a stirrer and a thermometer, and intensely stirred for about an hour at 150∼160°C. The obtained mixture was designated as Mixture D. After cooling down the mixture to room temperature, 80g of this mixture were mixed in a mechanical mixer with the same additives as used in Example 1.

Hereinafter the procedure was the same as in Example 1, and the results were shown in Table 1.

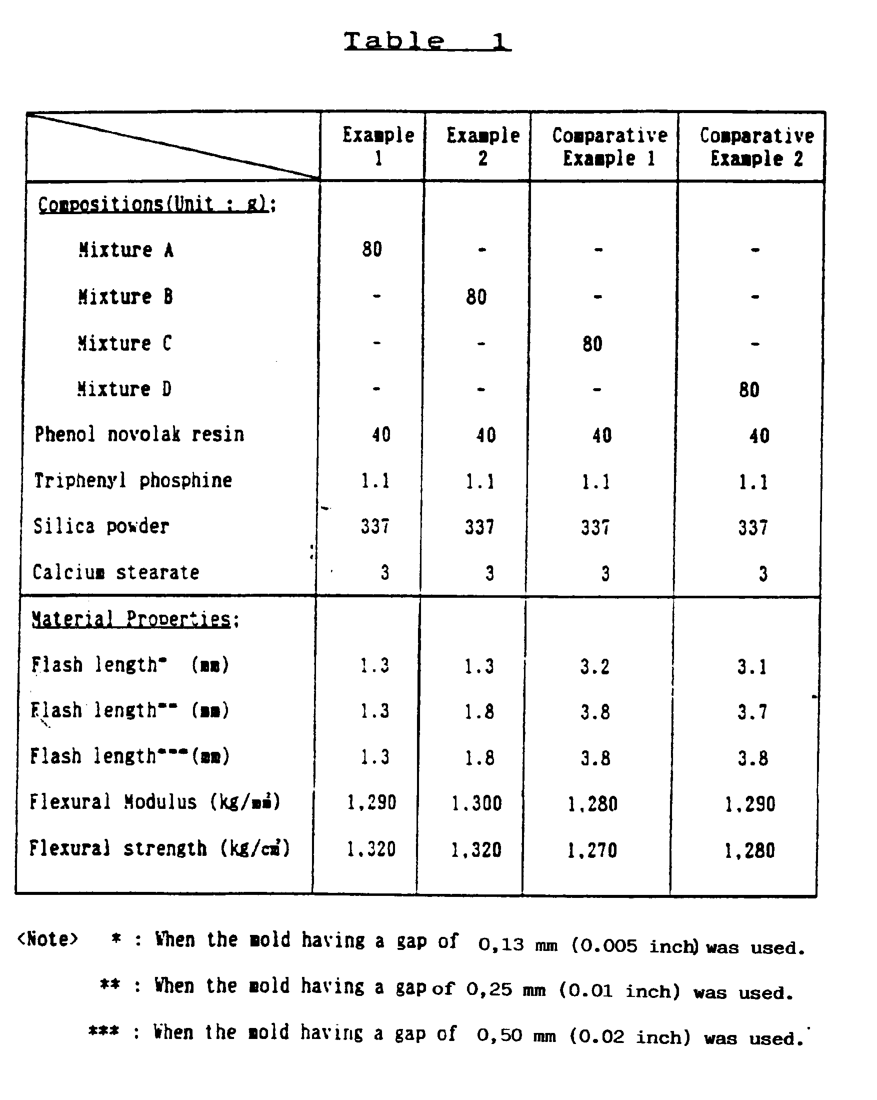

As shown in Table 1, the resin compositions, which comprise the polysiloxanes containing imide terminal groups according to the present invention, have considerably short flask lengths, improved flexural strength, and then excellent processability.

In conclusion, the present invention provides novel polysiloxanes containing imide terminal groups which are shown by the formula (I) and which can be effectively used as a modifying agent for synthetic resins.

## Claims

1. A polysiloxane containing imide terminal groups represented by formula (I) 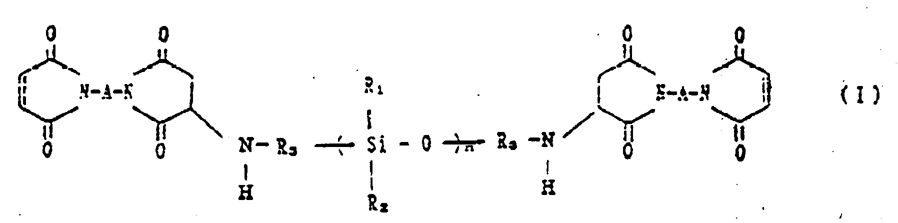 wherein
R₁ and R₂ are each methyl, ethyl, propyl or phenyl ;
R₃ represents an alkylene having 1 to 8 carbon atoms or an alkyl substituted alkylene having 1 to 8 carbon atoms ;
n represents an integer of 30 to 400 ; and
A represents a divalent group having at least 2 carbon atoms.

2. A process for preparing a polysiloxane containing imide terminal groups represented by formula (I) by a Michael addition reaction comprising reacting a bismaleimide represented by formula (II) with a polysiloxane diamine represented by formula (III) at a temperature of 110 to 150°C, 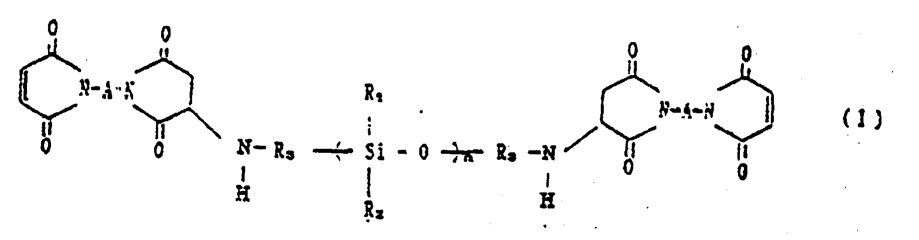 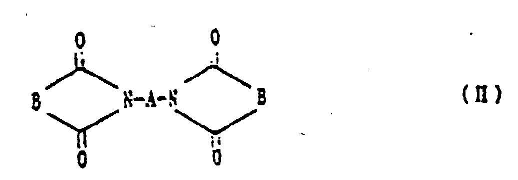 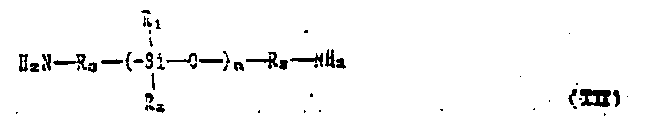 wherein
R₁ and R₂ are each methyl, ethyl, propyl or phenyl ;
R₃ represents an alkylene having 1 to 8 carbon atoms or an alkyl substituted alkylene having 1 to 8 carbon atoms ;
n represents an integer of 30 to 400 ;
A represents a divalent group having at least 2 carbon atoms ; and
B represents a divalent group having at least 2 carbon atoms and containing a carbon-carbon double bond.

3. The process according to claim 2, wherein the bismaleimide represented by formula (II) is selected from the group consisting of N,N'-1,3-phenylene bismaleimide, N,N'-4,4'-diphenylmethane bismaleimide, N,N'-4,4'-diphenylether bismaleimide, N,N'-4,4'-diphenylsulfono bismaleimide, N,N'-3,4'-diphenylsulfone bismaleimide, N,N'-4,4'-dicyclohexylmethane bismaleimide, N,N'-4,4'-dimethyl cyclohexane bismaleimide, N,N'-4,4'-diphenylcyclohexane bismaleimide, N,N'-1,3-xylilene bismaleimide, 2,4-bismaleimide toluene and 2,6-bismaleimide toluene.

4. The process according to claim 2, wherein the polysiloxane diamine represented by formula (III) is selected from the group consisting of poly(dimethyl siloxane) diamine, poly(methylphenyl siloxane) diamine, poly(epoxy-modified siloxane) diamine, poly(dimethyl siloxane) co-poly(diphenyl siloxane) diamine and polysiloxane-polyether diamine copolymer.

5. The polysiloxane according to claim 1, wherein A of formula (I) represents a divalent group having 2 to 20 carbon atoms.

6. The process according to claim 2, wherein A of formula (I) represents a divalent group having 2 to 20 carbon atoms.

7. The process according to claim 2, wherein B of formula (II) represents a divalent group having 2 to 6 carbon atoms and containing a carbon-carbon double bond.

## Patentansprüche

1. Polysiloxan, enthaltend Imid-Endgruppen, dargestellt durch die Formel I 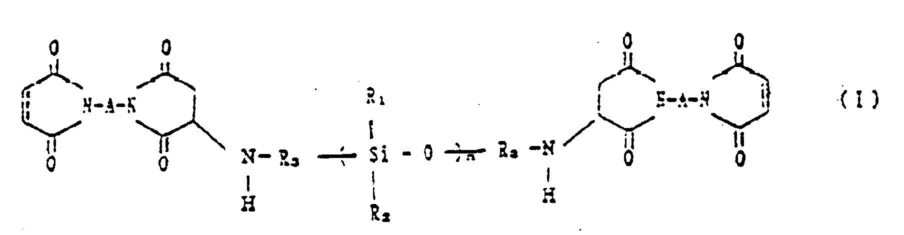 worin
R₁ und R₂ jeweils für Methyl, Ethyl, Propyl oder Phenyl stehen;
R₃ ein Alkylen mit 1 bis 8 Kohlenstoffatomen oder ein Alkyl-substituiertes Alkylen mit 1 bis 8 Kohlenstoffatomen darstellt;
n eine ganze Zahl von 30 bis 400 bedeutet; und
A eine zweiwertige Gruppe mit mindestens 2 Kohlenstoffatomen darstellt.

2. Verfahren zur Herstellung eines Polysiloxan, enthaltend Imid-Endgruppen, dargestellt durch Formel (I), durch eine Michael-Additionsreaktion, welche umfaßt Umsetzen eines Bismaleimid, dargestellt durch Formel (II), mit einem Polysiloxandiamin, dargestellt durch Formel (III), bei einer Temperatur von 110 bis 150 °C, 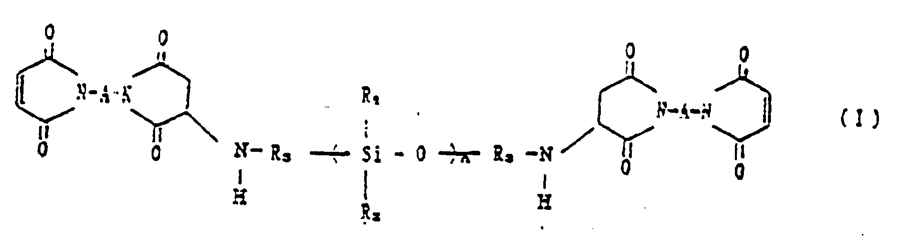 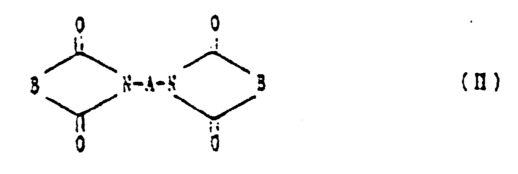 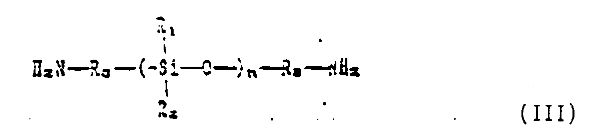 worin
R₁ und R₂ jeweils für Methyl, Ethyl, Propyl oder Phenyl stehen;
R₃ ein Alkylen mit 1 bis 8 Kohlenstoffatomen oder ein Alkyl-substituiertes Alkylen mit 1 bis 8 Kohlenstoffatomen darstellt;
n für eine ganze Zahl von 30 bis 400 steht;
A eine zweiwertige Gruppe mit mindestens 2 Kohlenstoffatomen darstellt; und
B eine zweiwertige Gruppe mit mindestens 2 Kohlenstoffatomen darstellt und eine Kohlenstoff-Kohlenstoff-Doppelbindung enthält.

3. Verfahren nach Anspruch 2, bei dem das durch Formel (II) dargestellte Bismaleimid ausgewählt wird aus der Gruppe, bestehend aus N,N'-1,3-Phenylenbismaleimid, N,N'-4,4'-Diphenylmethanbismaleimid, N,N'-4,4'-Diphenyletherbismaleimid, N,N'-4,4'-Diphenylsulfonbismaleimid, N,N'-3,4'-Diphenylsulfonbismaleimid, N,N'-4,4'-Dicyclohexylmethanbismaleimid, N,N'-4,4'-Dimethylcyclohexanbismaleimid, N,N'-4,4'-Diphenylcyclohexanbismaleimid, N,N'-1,3-Xylilenbismaleimid, N,N'-2,4-Bismaleimidtoluol und 2,6-Bismaleimidtoluol.

4. Verfahren nach Anspruch 2, bei dem das durch Formel (III) dargestellte Polysiloxandiamin ausgewählt wird aus der Gruppe, bestehend aus Poly(dimethylsiloxan)diamin, Poly(methylphenylsiloxan)diamin, Poly(epoxy-modifiziertem-siloxan)diamin, Poly(dimethylsiloxan)co-poly(diphenylsiloxan)diamin und einem Polysiloxanpolyetherdiamin-Copolymerem.

5. Polysiloxan nach Anspruch 1, bei dem A aus Formel (I) eine zweiwertige Gruppe darstellt mit 2 bis 20 Kohlenstoffatomen.

6. Verfahren nach Anspruch 2, bei dem A aus Formel (I) eine zweiwertige Gruppe mit 2 bis 20 Kohlenstoffatomen darstellt.

7. Verfahren nach Anspruch 2, bei dem B aus Formel (II) eine zweiwertige Gruppe mit 2 bis 6 Kohlenstoffatomen darstellt und eine Kohlenstoff-Kohlenstoff-Doppelbindung enthält.

## Revendications

1. Polysiloxanne contenant des groupes imides terminaux représentés par la formule I suivante : 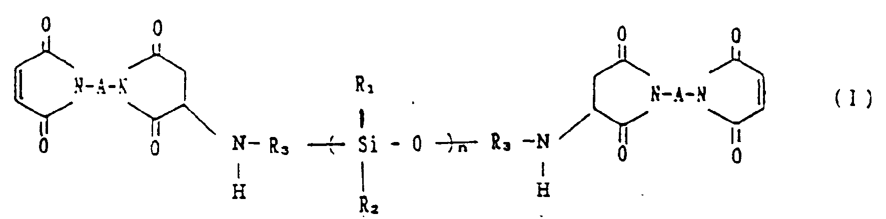 dans laquelle
R₁ et R₂ sont chacun méthyle, éthyle, propyle ou phényle ;
R₃ représente un alkylène ayant de 1 à 8 atomes de carbone ou un alkylène à substitution alkyle ayant de 1 à 8 atomes de carbone ;
n est un nombre entier ayant pour valeur 30 à 400 ; et
A représente un groupe divalent ayant au moins 2 atomes de carbone.

2. Procédé pour préparer un polysiloxanne contenant des groupes imides terminaux et représenté par la formule I, ledit procédé, qui met en oeuvre la réaction d'addition de Michael, comprenant la réaction d'un bismaléimide représenté par la formule II avec un composé polysiloxanne-diamine représenté par la formule III à une température de 110 à 150°C, 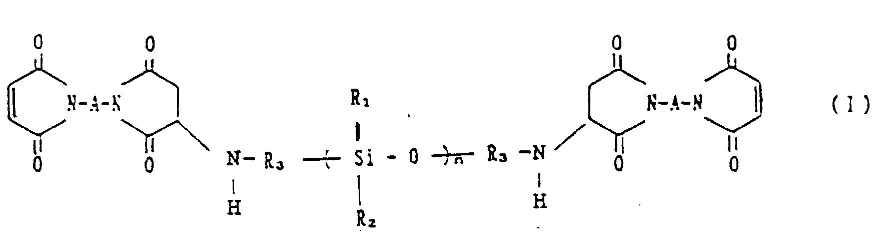 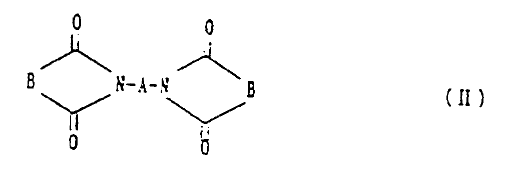 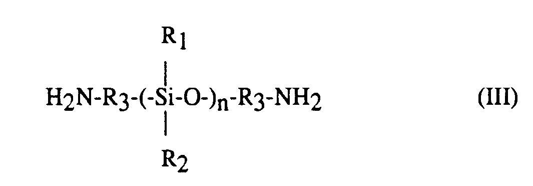 dans lesquelles
R₁ et R₂ sont chacun méthyle, éthyle, propyle ou phényle ;
R₃ représente un alkylène ayant de 1 à 8 atomes de carbone ou un alkylène à substitution alkyle ayant de 1 à 8 atomes de carbone ;
n est un nombre entier ayant pour valeur 30 à 400 ;
A représente un groupe divalent ayant au moins 2 atomes de carbone ; et
B représente un groupe divalent ayant au moins 2 atomes de carbone et contenant une double liaison C=C.

3. Procédé suivant la revendication 2, dans lequel le bismaléimide représenté par la formule II est choisi parmi l'ensemble constitué par les
N,N'-1,3-phénylène-bismaléimide,
N,N'-1,4-diphénylméthane-bismaléimide,
N,N'-4,4'-diphényléther-bismaléimide,
N,N'-4,4'-diphénylsulfone-bismaléimide,
N,N'-3,4'-diphénylsulfone-bismaléimide,
N,N'-4,4'-dicyclohexylméthane-bismaléimide,
N,N'-4,4'-diphénylcyclohexane-bismaléimide,
N,N'-1,3-xylilène-bismaléimide,
2,4-bismaléimide-toluène, et
2,6-bismaléimide-toluène.

4. Procédé suivant la revendication 2, dans lequel le polysiloxanne-diamine représenté par la formule III est choisi parmi l'ensemble constitué par les
poly(diméthylsiloxanne)diamine,
poly(méthylphénylsiloxanne)diamine,
poly(siloxanne époxy-modifié)diamine, et
un copolymère poly(diphénylsiloxanne)diamine/ polysiloxannepolyétherdiamine

5. Polysiloxanne suivant la revendication 1, dans lequel le groupe A de la formule I représente un groupe divalent ayant de 2 à 20 atomes de carbone.

6. Procédé suivant la revendication 2, dans lequel le groupe A de la formule I représente un groupe divalent ayant de 2 à 20 atomes de carbone.

7. Procédé suivant la revendication 2, dans lequel le groupe B de la formule II représente un groupe divalent ayant de 2 à 6 atomes de carbone et contenant une double liaison C=C.
